# EUROPEAN PATENT APPLICATION

(11) **EP 1 739 857 A2**
(43) Date of publication of application: **03.01.2007**
(21) Application number: 06116249.1
(22) Date of filing: 28.06.2006
(51) Int. Cl.: H04B 7/12, H04B 7/08

(54) **Antenna switching system**

(30) Priority: 30.06.2005 JP 2005192984
(71) Applicant: KABUSHIKI KAISHA TOSHIBA, Tokyo 105-8001 (JP)
(72) Inventor: Ono, Yuuji, 1-1, Shibaura 1-chome, Minato-ku ,Tokyo (JP); Fujihara, Mikine, 1-1, Shibaura 1-chome,Minato-ku, Tokyo (JP); Yoshida, Kazuyoshi, 1-1,Shibaura 1-chome, Minato-ku, Tokyo (JP)
(74) Representative: Henkel, Feiler & Hänzel

(57) **Abstract**

An antenna switching system includes: an antenna unit (1) having an antenna (4,5) and a switching circuit (6); a feeder line (3) connected to the switching circuit; and a receiving unit (2) connected to the feeder line. The switching circuit of the antenna unit is switched by a control signal supplied from a control signal sending portion included in the receiving unit.

## Description

### CROSS-REFERENCE TO RELATED APPLICATIONS

This application is based upon and claims the benefit of priority from Japanese Patent Application No. 2005-192984, filed on June 30, 2005, the entire contents of which are incorporated herein by reference.

### BACKGROUND

### 1. Field

One embodiment of the invention relates to a TV broadcasting receiving antenna switching system (circuit module unit) built in an apparatus such as a portable terminal, a cellular phone, a personal computer, a PC card, and a high frequency module.

### 2. Description of the Related Art

An apparatus, such as a portable terminal or a cellular phone, or such as a PC card or the like for use in a personal computer, having a capability of receiving TV broadcasting has been widely used.

However, the frequency band used for TV broadcasting has a wide bandwidth due to its characteristic. It is therefore difficult to cover the whole bandwidth with a single antenna.

In a portable terminal using radio waves in a frequency band close to a frequency band used for TV broadcasting, the radio waves used on the portable terminal might interfere with a TV tuner.

There is disclosed, in JP-A-7-297749, a communication apparatus with a plurality of antennas, in which one of the antennas can be selected while interference by the other antennas is prevented.

The document JP-A-7-297749 discloses a configuration in which a switch is provided for each antenna so that a position of the switch having a maximum voltage distribution of a standing wave can be grounded, and impendence of any other antenna, that is not selected, is broken.

According to the configuration disclosed in the document JP-A-7-297749, providing a grounding switch in addition to a switch for switching the antennas will increase the manufacturing cost.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary schematic diagram for explaining an example of an antenna switching system according to an embodiment.

Fig. 2 is an exemplary schematic diagram showing a receiving characteristic of the antenna switching system in Fig. 1.

Fig. 3 is an exemplary schematic diagram for explaining another embodiment of the antenna switching system shown in Fig. 1.

Fig. 4 is an exemplary schematic diagram for explaining further another embodiment of the antenna switching system shown in Fig. 1.

Fig. 5 is an exemplary schematic diagram for explaining further another embodiment of the antenna switching system shown in Fig. 1.

Fig. 6 is an exemplary schematic diagram for explaining further another embodiment of the antenna switching system shown in Fig. 1.

### DETAILED DESCRIPTION

Embodiments according to the invention will be described hereinafter with reference to the accompanying drawings.

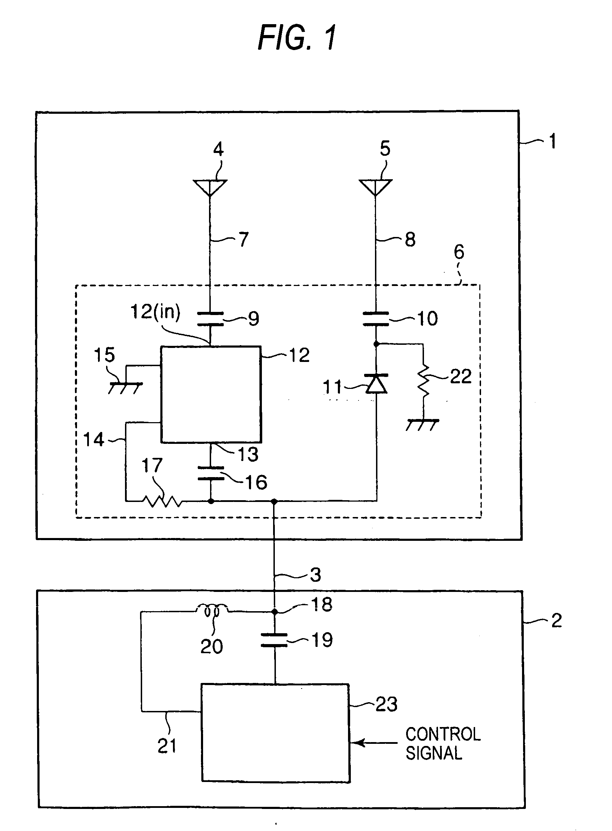

An antenna switching system (circuit module unit) according to a first embodiment includes an antenna unit 1, a receiving unit 2 and a feeder line 3 as shown in Fig. 1. The feeder line 3 is, for example, a coaxial cable, which connects the antenna unit 1 and the receiving unit 2 with each other.

The antenna unit 1 includes: first and second antennas 4 and 5; and a switching circuit 6 for switching the antennas. The antennas 4 and 5 are provided for the following reason. That is, when a band to be received is, for example, a UHF band (470-770 MHz), it is difficult to obtain a desired characteristic only by a single antenna. Particularly, assume that an antenna is built in a small-sized mobile apparatus such as a cellular phone. Since the antenna is requested to be miniaturized, the miniaturized antenna cannot cover the whole band. It is therefore useful to switch two antennas by means of a switching circuit.

A feed terminal 7 of the antenna 4 is connected to an input terminal 12(in) of an SPDT (Single Pole Double Throw) IC 12 through a DC-cutting capacitor 9. For example, the SPDT IC 12 includes an FET (Field Effect Transistor).

A feed terminal 8 of the antenna 5 is connected to the cathode side of a switching diode 11 and a resistor 22 through a DC-cutting capacitor 10. The other end of the resistor 22 is grounded.

The anode side of the switching diode 11 is connected to an output terminal 13 of the SPDT IC 12 through a DC-cutting capacitor 16. The same anode side is also connected to a control terminal 14 of the SPDT IC 12 through a resistor 17. The other control terminal 15 of the SPDT IC is grounded.

The receiving unit 2 has a receiving circuit 23. An input terminal 18 connected to the receiving circuit 23 through a DC-cutting capacitor 19 is connected to the feeder line 3 connected among the anode side of the switching diode 11, the DC-cutting capacitor 16 connected to the output terminal 13 of the SPDT IC 12, and the resistor 17.

The receiving circuit 23 includes a control output terminal (output terminal) 21 capable of sending a control signal for switching the switching circuit 6. The receiving circuit 23 can perform switching control upon the SPDT IC 12 and the switching diode 11 (switch the both) in accordance with a control signal output from the output terminal 21.

In the SPDT IC 12, electric continuity is established between input and output (12(in)-13) when the two control terminals 14 and 15 are in "Low level", while electric discontinuity is established between the same input and output when the control terminal 14 is in "High level" and the control terminal 15 is in "Low level".

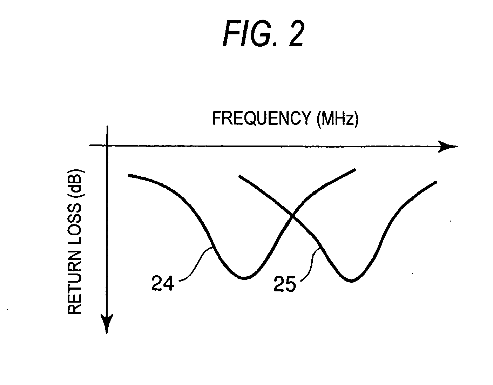

Next, the operation of the embodiment of the invention will be described in detail with reference to Figs. 1 and 2. In Fig. 2, a characteristic 24 designates a return loss characteristic in view from the feed terminal 7 of the antenna 4, and a characteristic 25 designates a return loss characteristic in view from the feed terminal 8 of the antenna 5. Not to say, the characteristic 24 corresponds to a frequency of a first frequency band of the whole receivable band, and the characteristic 25 corresponds to a frequency of a second frequency band at least a part of which does not overlap the first frequency band.

First, description will be made about the operation when the reception frequency is in the band of the characteristic 24.

Upon reception of a selection signal from the outside, the receiving circuit 23 acts as a unit for receiving the band of the characteristic 24. In this event, a control signal of "Low level (e.g. 0 V)" is output from the control output terminal 21. As a result, the control terminal 14 of the SPDT IC 12 is brought into "Low level" through the feeder line 3 so that the SPDT IC 12 is switched ON. Thus, electric continuity is established between the input and output (12 (in)-13) of the SPDT IC 12.

In this case, the control signal of "Low level" is also applied to the switching diode 11. However, no current flows into the switching diode 11. Thus, the switching diode 11 is turned OFF, and released. That is, when the reception frequency is in the band of the characteristic 24, the SPDT IC 12 is turned ON and the switching diode 11 is turned OFF so that a reception signal input to the antenna 4 is sent to the receiving unit 2 without leaking to the antenna 5.

Next, description will be made about the operation where the reception frequency is in the band of the characteristic 25.

Upon reception of a selection signal from the outside, the receiving circuit 23 acts as a unit for receiving the band of the characteristic 25. In this event, a control signal of "High level (e.g. 2.5 V)" is output from the control output terminal 21. As a result, the control terminal 14 of the SPDT IC 12 is brought into "High level" through the feeder line 3 so that the SPDT IC 12 is switched ON. Thus, electric discontinuity is established between the input and output (12 (in) -13) of the SPDT IC 12.

In this case, the control signal of "High level" is also applied to the anode side of the switching diode 11 but the cathode side of the switching diode 11 is grounded through the resistor (high resistance) 22 so that the switching diode 11 is biased forward. Thus, a current flows into the switching diode 11 so that the switching diode 11 is turned ON, and electric continuity is established therein. For example, the resistance value of the resistor 22 is 1 kΩ when the current flowing in the switching diode 11 is 1 mA. That is, when the reception frequency is in the band of the characteristic 25, the SPDT IC 12 is turned OFF and the switching diode 11 is turned ON so that a reception signal input to the antenna 5 is sent to the receiving unit 2 without leaking to the antenna 4.

The DC-cutting capacitor 19 is inserted between the node 18 between the feeder line 3 and the control output terminal 21 and the receiving circuit 23, and an inductor 20 is inserted between the node 18 and the control output terminal 21 so that the reception signal is prevented from leaking to the control output terminal 21.

The switching diode 11 is short of isolation in OFF time in comparison with the SPDT IC 12. For example, a PIN diode may be used instead. When a PIN diode is used, attenuation in ON time increases so that the input sensitivity characteristic deteriorates. However, isolation in OFF time also increases so that leakage to the antenna 5 can be reduced more greatly.

In case where a function similar to the aforementioned function can be obtained, there will be no problem that the SPDT IC 12 is replaced by a circuit consisting of an SPST (Single Pole Single Throw) IC or an FET.

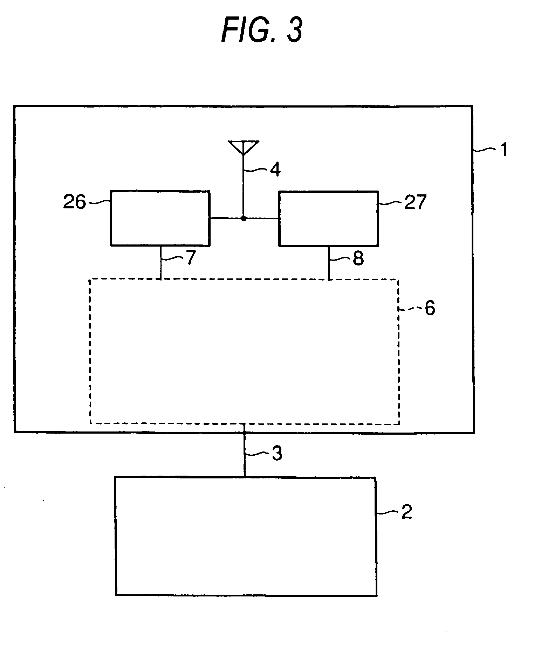

Next, an antenna switching system according to a second embodiment will be described with reference to Fig. 3. In Fig. 3, parts the same as those in Fig. 1 are referenced correspondingly, and description thereof will be simplified.

An antenna unit 1 shown in Fig. 3 includes one antenna 4, first and second matching circuits 26 and 27, and a switching circuit 6.

When a band to be received is, for example, a UHF band (470-770 MHz), it is difficult to obtain a desired characteristic only by a single antenna. In a case where an antenna is built in a small-sized mobile apparatus such as a cellular phone, the antenna is required to be miniaturized. To this end, a method for switching the first and second matching circuits 26 and 27 by a switch is useful to cover the whole band with the miniaturized antenna. Each matching circuit 26, 27 includes, for example, an inductor and a capacitor. The matching circuits 26 and 27 give the antenna 4 a characteristic to allow the antenna 4 to receive the frequency of the first characteristic 24 of the predetermined band shown in Fig. 2 and a characteristic to allow the antenna 4 to receive the frequency of the second characteristic 25 of the same, respectively.

In this case, when the switching circuit 6 described in the embodiment shown in Fig. 1 is used, the two matching circuits can be switched only by the feeder line 3. Not to say, there will be no problem if such a matching circuit is provided for only one of the antennas.

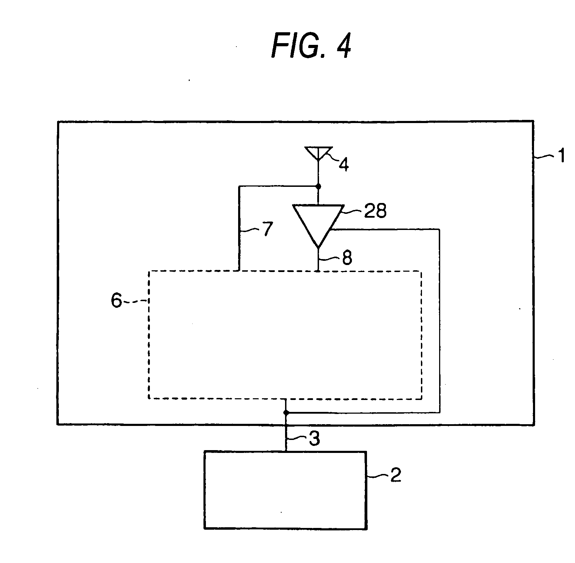

Next, an antenna switching system according to a third embodiment will be described with reference to Fig. 4. In Fig. 4, parts the same as those in Fig. 1 are referenced correspondingly, and description thereof will be simplified.

An antenna unit 1 shown in Fig. 4 includes one antenna 4, a low noise switch 28 and a switching circuit 6.

The antenna 4 is used for transmission and reception. In order to gain sensitivity at the time of reception, the low noise amplifier 28 is required. However, at the time of transmission, there is a problem that the transmission level is reduced by passing through the low noise amplifier 28.

As shown in Fig. 4, the antenna 4 and a feed terminal 7 are connected as the transmitter side (TX), while the antenna 4 and a feed terminal 8 are connected through the low noise amplifier 28 as the receiver side (RX). By use of the switching circuit 6 described with reference to Fig. 1, switching can be made only by one feeder line 3 so that the feeder line 3 with the feed terminal 7 is turned ON (the feeder line 3 with the feed terminal 8 is turned OFF) at the time of transmission, and the feeder line 3 with the feed terminal 8 is turned ON (the feeder line 3 with the feed terminal 7 is turned OFF) at the time of reception.

It is necessary to supply power to the low noise amplifier 28. When the feeder line 3 and a power terminal of the low noise amplifier 28 are connected, a control signal of "High level (e.g. 2.5 V)" is output from a control output terminal (21) at the time of reception. That is, the low noise amplifier 28 is turned ON (operable). On the other hand, at the time of transmission, a control signal of "Low level (e.g. 0 V)" is output so that the low noise amplifier 28 is turned OFF. Thus, excessive power consumption can be suppressed at the time of transmission (power consumption can be suppressed) . In addition, according to this method, influence of the low noise amplifier 28 (reduction in transmission level) can be prevented at the time of transmission.

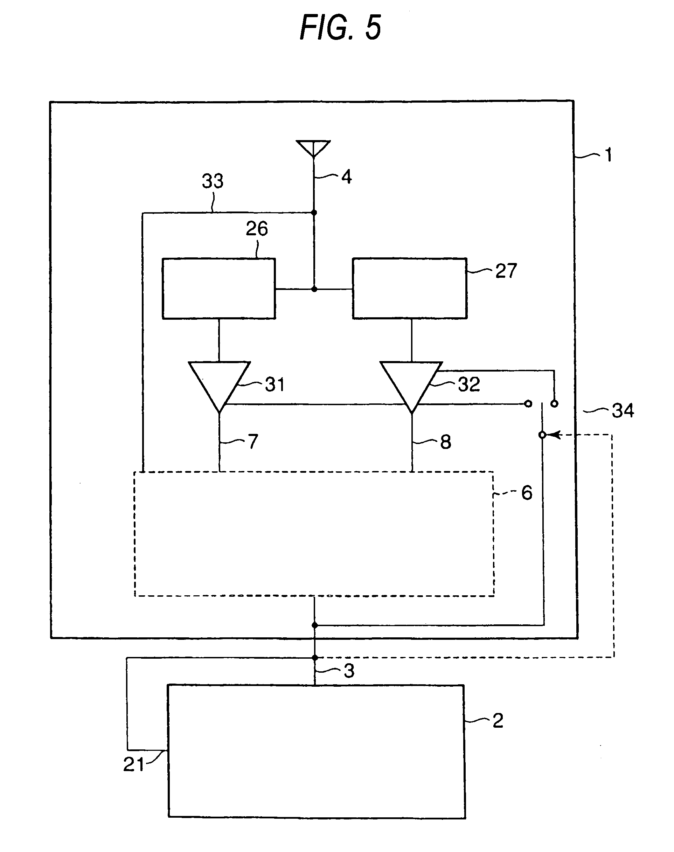

Fig. 5 shows an antenna switching system according to a fourth embodiment. In Fig. 5, parts the same as those in Fig. 1 are referenced correspondingly, and description thereof will be simplified.

An antenna unit 1 shown in Fig. 4 includes one antenna 4, first and second matching circuits 26 and 27, low noise amplifiers 31 and 32 connected to the matching circuits respectively, and a switching circuit 6. When a band to be received is, for example, a UHF band (470-770 MHz), it is difficult to obtain a desired characteristic only by a single antenna as described with reference to Fig. 1. Particularly, assume that an antenna is built in a small-sized mobile apparatus such as a cellular phone. In this case, the antenna is requested to be miniaturized. To this end, a method for switching the first and second matching circuits 26 and 27 by a switch is useful to cover the whole band with one miniaturized antenna.

The antenna 4 is used for transmission and reception. In order to gain sensitivity at the time of reception, the low noise amplifiers 31 and 32 are required. However, at the time of transmission, the transmission level is reduced due to the low noise amplifiers 31 and 32. Therefore, the antenna 4 and the switching circuit 6 are connected through a signal line 33 as the transmitter side (TX).

On the other hand, as the receiver side (RX), the antenna 4 and a feed terminal 7 are connected through the first matching circuit 26 and the first low noise amplifier 31, and the antenna 4 and a feed terminal 8 are connected through a second matching circuit 27 and a second low noise amplifier 32.

Thus, by use of the switching circuit 6 described in Fig. 1, switching can be made only by one feeder line 3 so that the influence of the low noise amplifiers 31 and 32 can be eliminated at the time of transmission while the feeder line 3 with the feed terminal 7 is turned ON (the feeder line 3 with the feed terminal 8 is turned OFF) at the time of reception, and the feeder line 3 with the feed terminal 8 is turned ON (the feeder line 3 with the feed terminal 7 is turned OFF) at the time of reception.

It is necessary to supply power to the low noise amplifiers 31 and 32. When a power terminal is connected (selectively) through a power supply changeover switch 34 between the feeder line 3 and each low noise amplifier 31, 32, a control signal of "High level (e.g. 2.5 V)" is output from a control output terminal (21) at the time of reception. That is, each low noise amplifier 31 and 32 is turned ON (operable) selectively correspondingly to each selected antenna 4, 5. Not to say, the switch 34 may be changed over in sync with a selection signal supplied to the receiving circuit 23 from the outside.

In the embodiment described above, when the aforementioned circuit is built in a small-sized mobile apparatus such as a cellular phone, switching between two antennas, between two matching circuits and between transmission and reception can be controlled by only one feeder line. Thus, the layout can be arranged easily, and the space and the cost can be saved.

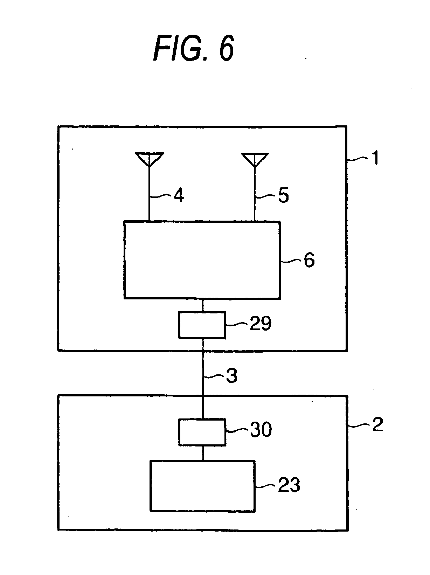

Next, an antenna switching system according to a fifth embodiment will be described with reference to Fig. 6. In Fig. 6, parts the same as those in Fig. 1 are referenced correspondingly, and description thereof will be simplified.

When a TV tuner is built in a cellular phone, the cellular phone frequently communicates with a base station regardless of whether it has a call or not. Accordingly, a communication signal serves as a jamming signal for the TV tuner whenever the cellular phone has communication.

For example, a cellular phone using a frequency band called a 800 MHz band is apt to suffer interfere because the frequency is very close to the frequency of a highest-frequency RF signal (770 MHz) of TV broadcasting waves, thereby causing degradation in TV image quality.

Therefore, signal processing circuits for eliminating jamming signals, for example, filters (low pass filters, high pass filters, or band pass filters) or traps 29 and 30 having resonance points at jamming signal frequencies have to be provided on the lines of reception signals in the antenna unit 1 and the receiving unit 2.

However, the transmission wave level of the cellular phone is up to +24 dBm and so high that filters or traps having attenuation of about 60 dB are required in consideration of isolation between the antenna of the TV tuner and the antenna of the cellular phone, the performance of the TV tuner, and so on.

In order to attain such high attenuation, however, the circuit scale needs to be increased. In addition, when the filters or traps are mounted on the tuner built in the cellular phone, they cannot be implemented by one chip, but at least two chips are required.

When the two chips are mounted on the antenna unit 1 or the reception unit 2, the distance between input and output is so short that attenuation of the two chips theoretically expected to have a value 2 times as high as that of one chip decreases to about 1.7 times.

When the filters or traps 29 and 30 are provided on the antenna unit 1 and the receiving unit 2 respectively one by one, it is possible to obtain attenuation of about 2 times.

That is, when the chips of the filters or traps 29 and 30 are disposed on the switching circuit 6 side and the receiving circuit 23 side respectively one by one through the feeder line 3, the filters or traps can be operated in cooperation with each other.

The filters or traps 29 and 30 are not limited to chip forms. Similar effect can be obtained even if they are assemblies of a plurality of chip devices such as LCRs.

The antenna switching system (circuit module unit) described above with reference to the embodiments is not limited to an appliance to a portable terminal, a cellular phone, a personal computer, a PC card, a high frequency module. The antenna switching system can be applied to any apparatus that is portable and provided with a TV tuner (TV receiving function) .

According to the present invention, there is provided an antenna switching system (circuit module unit) capable of switching signals received from two antennas having different characteristics for different bands respectively by use of a single feeder line so that the cost can be reduced and the space can be saved. In addition, when two chips of filters and traps for eliminating jamming signals are mounted on the antenna unit and the receiving unit respectively one by one, the jamming signals can be eliminated efficiently.

The present invention is not limited to any one of the aforementioned embodiments. Various modifications or changes can be made on the invention without departing from the gist thereof when it is carried out. The embodiments may be combined with one another suitably if possible, or each embodiment may be partially deleted when it is carried out. On those occasions, various effects caused by the combination or deletion can be obtained.

It is to be understood that the invention is not limited to the specific embodiments described above and that the invention can be embodied with the components modified without departing from the spirit and scope of the invention. The invention can be embodied in various forms according to appropriate combinations of the components disclosed in the embodiment described above. For example, some components may be deleted from all components shown in the embodiment. Further, the components in different embodiments may be used appropriately in combination.

## Claims

1. An antenna switching system comprising:
an antenna unit;
a receiving unit; and
a single feeder line that connects the antenna unit and the receiving unit,
wherein the antenna unit comprises:
an antenna that receives a first signal of a first frequency band and a second signal of a second frequency band; and
a switching circuit that is connected to the antenna and the feeder line, and selectively outputs one of the first signal and the second signal, and
wherein the receiving unit supplies a switching signal to the switching circuit through the feeder line and selectively receives one of the first and second signals through the feeder line, the switching signal controlling the output by the switching circuit.

2. The antenna switching system according to claim 1, wherein the switching circuit comprises:
a signal processing unit that is connected to the antenna and the feeder line, and receives from the antenna the first signal of the first frequency band;
a unidirectional device that is connected to the antenna and the feeder line, and receives from the antenna the second signal of the second frequency band; and
a bias resistor that biases the unidirectional device.

3. The antenna switching system according to claim 1, wherein the antenna comprises:
a first antenna that has a reception characteristic in the first frequency band; and
a second antenna that has a reception characteristic in the second frequency band that partially overlaps with the first frequency band,
wherein the signal processing unit is connected to the first antenna, and
wherein the unidirectional device is connected to the second antenna.

4. The antenna switching system according to claim 1, wherein the antenna has a reception characteristic of a third frequency band that includes the first frequency band and the second frequency band,
wherein the antenna unit further comprises:
a first matching circuit that allows the antenna to receive the first signal of the first frequency band; and
a second matching circuit that allows the antenna to receive the second signal of the second frequency band, at least a part of the second frequency band being set to unoverlap with the first frequency band.

5. The antenna switching system according to claim 1, wherein the antenna comprises:
a first antenna that has a reception characteristic in the first frequency band; and
a second antenna that has a reception characteristic in the second frequency band that partially overlaps with the first frequency band,
wherein the antenna unit further comprises a first signal processing circuit that reduces components having influence on the signal to be received by the receiving unit, and
wherein the receiving unit further comprises a second signal processing circuit that reduces components having influence on the signal to be received by the receiving unit in cooperation with the first signal processing circuit.

6. An antenna switching system comprising:
an antenna unit;
a receiving unit; and
a single feeder line that connects the antenna unit and the receiving unit,
wherein the antenna unit comprises:
an antenna that receives a reception signal of a predetermined frequency band;
an amplifier that amplifies the reception signal received by the antenna;
a switching circuit that is connected to the antenna and the feeder line, and selectively performs one of outputting the reception signal amplified by the amplifier to the receiving unit through the feeder line, and outputting a transmission signal input through the feeder line to the antenna, and
wherein the receiving unit supplies a switching signal to the switching circuit through the feeder line, the switching signal controlling the selection by the switching circuit and supplying power to the amplifier.

7. The antenna switching system according to claim 6, wherein the antenna has a reception characteristic of a third frequency band that includes the first frequency band and the second frequency band,
wherein the antenna unit further comprises:
a first matching circuit that allows the antenna to receive the first signal of the first frequency band; and
a second matching circuit that allows the antenna to receive the second signal of the second frequency band, at least a part of the second frequency band being set to unoverlap with the first frequency band,
wherein the amplifier comprises:
a first amplifier that amplifies the first signal; and
a second amplifier that amplifies the second signal, and
wherein the receiving unit supplies the switching signal that supplies power to one of the first amplifier and the second amplifier.
